(19) Europäisches Patentamt
European Patent Office
Office européen des brevets

(11) Veröffentlichungsnummer: **0 171 001**
**B1**

# (12) EUROPÄISCHE PATENTSCHRIFT

(45) Veröffentlichungstag der Patentschrift: **06.09.89**

(51) Int. Cl.⁴: **B 01 D 53/36**, B 01 J 23/26

(21) Anmeldenummer: **85109409.4**

(22) Anmeldetag: **26.07.85**

(54) **Verfahren zur selektiven katalytischen Hydrolyse von anorganischen Schwefelverbindungen.**

(30) Priorität: **09.08.84 DE 3429394**

(43) Veröffentlichungstag der Anmeldung: **12.02.86 Patentblatt 86/7**

(45) Bekanntmachung des Hinweises auf die Patenterteilung: **06.09.89 Patentblatt 89/36**

(84) Benannte Vertragsstaaten: **DE FR GB NL**

(56) Entgegenhaltungen:
**DE-A-3 312 515**
**DE-B-1 417 686**
**US-A-3 554 689**
**US-A-4 436 836**

(73) Patentinhaber: **SÜD-CHEMIE AG, Lenbachplatz 6, D-8000 München 2 (DE)**

(72) Erfinder: **Wimmer, Theodor, Gerner Strasse 27, D-8000 München 19 (DE)**
Erfinder: **Kremer, Hans-Joachim, Dr., Zugspitzstrasse 7, D-8011 Poing (DE)**

(74) Vertreter: **Reitzner, Bruno, Dr. et al, Patentanwälte R. Splanemann Dr. B. Reitzner, J. Richter F. Werdermann Tal 13, D-8000 München 2 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur selektiven katalytischen Hydrolyse der in CO-haltigen Prozeßgasen enthaltenen anorganischen Schwefelverbindungen COS und/oder $CS_2$.

Es ist bekannt, anorganische Schwefelverbindungen, wie COS und $CS_2$, nach physikalischen oder chemischen Verfahren mit Waschlaugen oder durch Adsorption aus Prozeßgasen zu entfernen. Eine zusammenfassende Übersicht dieser bekannten Verfahren findet sich bei R. D. Stoll und S. Röper, «Erdöl und Kohle», Band 35, Seite 380–385 (1982). Diese Verfahren werden hauptsächlich zur Reinigung von saure Schwefelverbindungen enthaltendem Erdgas (Sauergas) angewendet, eignen sich aber auch zur Entfernung von Schwefelverbindungen aus Prozeßgasen, wie Rauchgasen, Claus-Abgasen und Kohleveredelungsgasen. Die anorganischen Schwefelverbindungen können beispielsweise physikalisch mit Hilfe von N-Methylpyrrolidon, Propylencarbonat oder Polyäthylenglycol-Dimethyläther enthaltenden Waschlaugen oder chemisch durch Umsetzung mit alkalisch reagierenden organischen Verbindungen (z. B. Diisopropanolamin, Kalium-Dimethylaminoessigsäure, Alkanolaminen) aus dem Gas entfernt werden. Die Adsorptionsverfahren werden mit Hilfe von Adsorptionsmitteln, wie $Fe_2O_3$, Aktivkohle, Molekularsieben, Dolomit, Kieselgel und ähnlichen Verbindungen durchgeführt. Die genannten Verfahren sind jedoch kostspielig und aufwendig.

Man hat ferner versucht, die organischen Schwefelverbindungen COS und/oder $CS_2$ durch katalytische Hydrolyse in Schwefelwasserstoff ($H_2S$) umzuwandeln. Der Schwefelwasserstoff wird dann im allgemeinen nach dem Claus-Verfahren in elementaren Schwefel übergeführt. Beim Claus-Verfahren wird ein Teil des Schwefelwasserstoffs zunächst mit Sauerstoff zu $SO_2$ oxidiert. Dieses reagiert mit einem weiteren Teil des Schwefelwasserstoffs zu elementarem Schwefel. Der nicht umgesetzte Schwefelwasserstoff kann dann z. B. durch Absorption an Zinkoxid entfernt werden.

Ein Verfahren zur Entfernung von COS aus sauerstoff- und wasserstoffhaltigen Gasen durch katalytische Hydrolyse ist beispielsweise aus der US-A-2 554 689 bekannt. Bei diesem Verfahren wird zunächst der Sauerstoff durch Umsetzung mit Wasserstoff in Anwesenheit eines hochaktiven Hydrierkatalysators entfernt, worauf das COS bei Temperaturen unterhalb von 150 °C zu $H_2S$ hydrolysiert wird. Der für die Hydrolyse verwendete Katalysator enthält ein oder mehrere Oxide von Metallen der Gruppe VI und/oder VIII des Periodensystems, insbesondere Kobaltmolybdat, der sich gegebenenfalls auf einem Aluminiumoxid-Träger befinden kann. Der Katalysator ist zwar selektiv in der COS-Hydrolyse bei niedrigen Temperaturen, hat jedoch nur eine geringe Hydrolyseaktivität bezüglich $CS_2$. Außerdem hat er keine Aktivität bezüglich HCN, das ebenfalls in Prozeßgasen vorhanden sein kann. Der Katalysator ist also in seiner Anwendung äußerst beschränkt und stellt keine Lösung für die heutigen technischen Probleme dar.

Die bei der katalytischen Hydrolyse von COS und $CS_2$ stattfindenden Prozesse lassen sich durch die nachstehend angegebenen Gleichgewichtsreaktionen darstellen:

$$COS + H_2O \rightleftarrows CO_2 + H_2S \quad (1)$$
$$COS + H_2 \rightleftarrows CO + H_2S \quad (2)$$
$$CS_2 + 2\,H_2O \rightleftarrows CO_2 + 2\,H_2S \quad (3)$$

Die beabsichtigten Reaktionen sind hauptsächlich die Reaktionen nach den Gleichungen (1) und (3) von links nach rechts, d. h. die entsprechenden Hinreaktionen. Bei Anwesenheit von Wasserstoff findet auch die Reaktion nach (2) von links nach rechts statt, die ebenfalls erwünscht ist. Unerwünscht ist aber die Reaktion nach (2) von rechts nach links, d. h. die Rückreaktion (nachstehend als 2R bezeichnet). Diese Reaktion tritt immer auf, da die Reaktion gemäß (2) eine Gleichgewichtsreaktion ist, und wird bei einem hohen CO-Partialdruck begünstigt. Es wird also in diesem Fall aus dem nach den Reaktionen (1) und (3) gebildeten $H_2S$ oder auch aus ursprünglich im Gas enthaltenem $H_2S$ wieder das unerwünschte COS (nach 2R) gebildet.

Die US-A-44 36 836 betrifft ein Verfahren zur Hydrodealkylierung von alkylaromatischen Verbindungen unter Verwendung eines alkalisierten Chromoxid-Aluminiumoxid-Katalysators. Der Katalysator kann auch für die hydrierende Entschwefelung von Thiophen in Kohlenwasserstoffströmen verwendet werden. Ein Verfahren zur selektiven katalytischen Hydrolyse der in CO-haltigen Prozeßgasen enthaltenen anorganischen Schwefelverbindung COS und/oder $CS_2$ ist dort weder beschrieben noch nahegelegt, da insbesondere Reaktionen vom Typ der Reaktion (2) die bei einem hohen CO-Partialdruck durch die Rückreaktion (2R) zurückgedrängt wird, nicht angesprochen sind.

Die DE-A-33 12 515 betrifft ein Verfahren zur Herstellung von Olefinen aus niedrigen aliphatischen Paraffinen durch Dehydrierung in Anwesenheit eines Aluminiumoxid-Chromoxid-Katalysators, wobei durch die Vorbehandlung des Katalysators mit Wasserstoffgas und die Regenerierung des Katalysators mit Sauerstoff in einer Recyclisierungs-Produktlinie die Ausbeute verbessert wird. Diese Reaktion hat mit der erfindungsgemäßen Reaktion nichts zu tun, da nicht einmal Schwefelverbindungen erwähnt sind.

Die DE-B-14 17 686 betrifft ein Verfahren zur Herstellung eines alkalisierten Chromoxid-Aluminiumoxid-Katalysators für die Dehydrierung von Kohlenwasserstoffen mit 3 bis 5 Kohlenstoffatomen. Auch diese Reaktion hat mit der erfindungsgemäßen Reaktion nichts zu tun.

Der Erfindung liegt die Aufgabe zugrunde, bei einem Verfahren der eingangs definierten Gattung die Reaktion (2R) auch dann zu unterdrücken, wenn sie aufgrund des CO-Partialdrucks thermodynamisch begünstigt ist.

Diese Aufgabe wird erfindungsgemäß dadurch gelöst, daß man das Prozeßgas in Gegenwart von $H_2O$ bei Temperaturen von 100 bis 350° über einen alkalisierten Chromoxid-Aluminium-Katalysator leitet, der 3 bis 20 Gew.-% $Cr_2O_3$ enthält.

Da der erfindungsgemäß verwendete Katalysator eine sehr hohe Dehydrieraktivität zeigt, ist es überraschend, daß er die Reaktion (2R) unterdrückt, da es sich hier ebenfalls um eine Dehydrierreaktion handelt.

Der erfindungsgemäß verwendete Katalysator enthält 0,1 bis 15, vorzugsweise 1 bis 10 Gew.-% einer alkalisch reagierenden Alkalimetallverbindung (berechnet als $Me_2O$, worin Me Na, K, Rb oder Cs bedeuten). Als alkalisch reagierende Alkalimetallverbindungen verwendet man gewöhnlich die Hydroxide, Carbonate, Hydrogencarbonate, Acetate oder Oxalate der vorstehend mit Me bezeichneten Alkalimetalle. Als besonders bevorzugte alkalisch reagierende Alkalimetallverbindung wird $K_2CO_3$ verwendet.

Die Trägersubstanz des erfindungsgemäß verwendeten Katalysators ist Aluminiumoxid, wobei alle Modifikationen verwendet werden. Vorzugsweise wird jedoch das γ-Aluminiumoxid verwendet, das im allgemeinen eine Oberfläche von 30–300 $m^2/g$, vorzugsweise von 60–220 $m^2/g$ hat.

Das Prozeßgas wird im allgemeinen bei erhöhtem Druck über den Katalysator geleitet. Vorzugsweise leitet man das Prozeßgas bei Temperaturen von 100 bis 350 °C, insbesondere von 100 bis 300 °C über den Katalysator.

Es wurde ferner gefunden, daß beim Einsatz des erfindungsgemäß verwendeten Katalysators überraschenderweise eine Hydrolyse von Cyanwasserstoff (HCN), der in Prozeßgasen enthalten sein kann, erfolgt. Die Erfindung betrifft somit auch ein Verfahren, bei dem man ein HCN-haltiges Prozeßgas einsetzt.

Der bei dem erfindungsgemäßen Verfahren als Reaktionsprodukt erhaltene Schwefelwasserstoff kann in an sich bekannter Weise aufgearbeitet werden. Zu diesem Zweck können dem Hydrolysereaktor Einrichtungen zum Auswaschen oder zur Adsorption des im Prozeßgas enthaltenen Schwefelwasserstoffs nachgeschaltet werden. Der aus den Waschflüssigkeiten bzw. aus den Adsorptionsmitteln wiedergewonnene Schwefelwasserstoff kann dann nach dem Claus-Verfahren zu elementarem Schwefel umgesetzt werden.

Wenn das Prozeßgas nach dem Auswaschen bzw. nach der Adsorption noch Reste von $H_2S$ enthält, können zur Feinreinigung noch Zinkoxid-Absorptionsreaktoren nachgeschaltet werden. Soll das Prozeßgas beispielsweise für die Methanolsynthese verwendet werden, so kann die Betriebstemperatur bei einer Trocken-Raumgeschwindigkeit von 1000 Volumteilen Gas je Volumteil Katalysator und Stunde etwa 280 °C betragen. Soll das Prozeßgas für die Ammoniaksynthese verwendet werden, so kann die Temperatur bei einer Naß-Raumgeschwindigkeit von 10 000 Volumteilen je Volumteil Katalysator und Stunde etwa 220 °C betragen. In beiden Fällen liegt der $H_2S$-Gehalt unter 0,1 ppm.

Die erfindungsgemäß verwendeten Katalysatoren können im allgemeinen wie folgt hergestellt werden.

Der Aluminiumoxid-Träger wird bei einer Temperatur von 20–120 °C in eine Chromsalz-Lösung getaucht und anschließend stufenweise bei Temperaturen von 80–8000 °C getrocknet und calciniert. Dann folgt eine weitere Tauchung in eine Lösung von Kaliumsalz, vorzugsweise $K_2CO_3$, und eine erneute Trocknung bei einer Temperatur von 80–180 °C.

Ein so hergestellter Katalysator, der 8 bis 12 Gew.% $Cr_2O_3$ und etwa 4 Gew.% $K_2CO_3$ (Berechnet als $K_2O$), Rest γ-$Al_2O_3$ enthielt, wurde zu Tabletten mit den Abmessungen 6 × 6 bzw. 4,5 × 4,5 mm geformt. Die Schüttdichte des Katalysators betrug etwa 1,0 kg/l. Die Tabletten hatten eine Seitendruckfestigkeit von 16 kg. Die spezifische Oberfläche des Katalysators betrug etwa 150 $m^2/g$, sein Porenvolumen etwa 0,3 $cm^3/g$.

Die erfindungsgemäß verwendeten Katalysatoren wurden entsprechend den nachstehenden Beispielen auf ihre Selektivität im Hinblick auf die Umsetzung von COS untersucht. Die Selektivität ist definiert als der Abstand zwischen dem erreichten COS-Wert und dem COS-Wert, der sich beim Erreichen des Gleichgewichts nach der Reaktion (2), d.h. bei ungehinderter Reaktion (2R) einstellen könnte. Eine Selektivität von 100% entspräche dann dem COS-Wert, der sich ergibt, wenn die Reaktion (1) im Gleichgewicht ist.

Die mathematische Formel für die Selektivität läßt sich wie folgt ausdrücken:

$$Sel = 100 - \frac{COS_{erhalten} - COS_{Gleichgewicht\,(1)}}{COS_{Gleichgewicht\,(2)} - COS_{Gleichgew\,(1)}} \cdot 100$$

Die verschiedenen COS-Werte in der obigen Formel werden in ppm eingesetzt, kürzen sich dann aber heraus, so daß Sel eine dimensionslose Zahl wird.

Beispiel 1

Ein Prozeßgas mit der in Tabelle I angegebenen Zusammensetzung wurde bei einem Druck von 9,2 atm, einer Temperatur von 201 °C, einer Raumgeschwindigkeit von 900 Volumteilen Gas je Volumteil Katalysator und Stunde (vvh) mit Wasserdampf (Volumverhältnis Dampf/Gas = 0,131) an einem Katalysator mit folgender Zusammensetzung umgesetzt:

9% $Cr_2O_3$, 4% $K_2O$, Rest γ-$Al_2O_3$.

Die Zusammensetzung des austretenden Gases sowie die theoretischen Gleichgewichtswerte für COS nach den Gleichungen (1) und (2) und die daraus errechnete Selektivität sind ebenfalls in Tabelle I angegeben.

Tabelle I

| Bestandteile | Gaszusammensetzung Eintritt | Austritt |
|---|---|---|
| CO | 97,16 Vol.% | 97,24 Vol.% |
| $CO_2$ | 0,48 Vol.% | 0,96 Vol.% |
| $H_2$ | 0,35 Vol.% | 0,35 Vol.% |
| $N_2$ | 0,93 Vol.% | 0,98 Vol.% |
| $H_2S$ | 135 ppm | 5097 ppm |
| COS | 3589 ppm | 34 ppm |
| $CS_2$ | 767 ppm | 0 ppm |
| $COS_{Gleichgew. (1)}$ | 0,047 ppm | |
| $COS_{Gleichgew. (2)}$ | 4919,114 ppm | |
| Selektivität | 99,3% | |

Beispiel 2

Ein Prozeß mit der in Tabelle II angegebenen Zusammensetzung wurde bei einem Druck von 9,2 atm, einer Temperatur von 145 °C, einer Raumgeschwindigkeit von 1330 vvh mit Wasserdampf (Volumverhältnis Dampf/Gas = 0,076) an einem Katalysator umgesetzt, der folgende Zusammensetzung hatte:

11% $Cr_2O_3$, 5% $K_2O$, Rest $\gamma$-$Al_2O_3$

Tabelle II

| Bestandteile | Gaszusammensetzung Eintritt | Austritt |
|---|---|---|
| CO | 96,95 Vol.% | 96,99 Vol.% |
| $CO_2$ | 0,87 Vol.% | 0,87 Vol.% |
| $H_2$ | 0,40 Vol.% | 0,42 Vol.% |
| $N_2$ | 0,84 Vol.% | 0,83 Vol.% |
| $H_2S$ | 4568 ppm | 4698 ppm |
| COS | 117 ppm | 4 ppm |
| $CS_2$ | 5 ppm | 0 ppm |
| $COS_{Gleichgew. (1)}$ | 0,042 ppm | |
| $COS_{Gleichgew. (2)}$ | 4414,372 ppm | |
| Selektivität | 99,9% | |

Beispiel 3

Ein Prozeßgas mit der in Tabelle III angegebenen Zusammensetzung wurde bei einem Druck von 9,2 atm, einer Temperatur von 134 °C und einer Raumgeschwindigkeit von 770 vvh mit Wasserdampf (Volumverhältnis Dampf/Gas = 0,129) an einem Katalysator umgesetzt, der folgende Zusammensetzung hatte:

12% $Cr_2O_3$, 4% $K_2O$, Rest $\gamma$-$Al_2O_3$

Die Zusammensetzung des austretenden Gases sowie die theoretischen Gleichgewichtswerte für COS nach den Gleichungen (1) und (2) und die daraus errechnete Selektivität sind ebenfalls in Tabelle III angegeben.

Tabelle III

| Bestandteile | Gaszusammensetzung Eintritt | Austritt |
|---|---|---|
| CO | 97,02 Vol.% | 97,06 Vol.% |
| $CO_2$ | 0,88 Vol.% | 0,90 Vol.% |
| $H_2$ | 0,35 Vol.% | 0,33 Vol.% |
| $N_2$ | 0,79 Vol.% | 0,71 Vol.% |
| $H_2S$ | 4527 ppm | 4617 ppm |
| COS | 183 ppm | 3 ppm |
| $CS_2$ | 5 ppm | 1 ppm |
| $COS_{Gleichgew. (1)}$ | 0,019 ppm | |
| $COS_{Gleichgew. (2)}$ | 4482,839 ppm | |
| Selektivität | 99,9% | |

Beispiel 4

Ein Prozeßgas mit der in Tabelle IV angegebenen Zusammensetzung wurde bei einem Druck von 5,1 atm, einer Temperatur von 164 °C und einer Raumgeschwindigkeit von 2980 vvh mit Wasserdampf (Volumverhältnis Dampf/Gas = 0,074) an einem Katalysator umgesetzt, der folgende Zusammensetzung hatte:

8% $Cr_2O_3$, 4% $K_2O$, Rest $\gamma$-$Al_2O_3$

Die Zusammensetzung des austretenden Gases sowie die theoretischen Gleichgewichtswerte für COS nach den Gleichungen (1) und (2) und die daraus errechnete Selektivität sind ebenfalls in Tabelle IV angegeben.

Tabelle IV

| Bestandteile | Gaszusammensetzung Eintritt | Austritt |
|---|---|---|
| CO | 20,65 Vol.% | 20,45 Vol.% |
| $CO_2$ | 35,39 Vol.% | 35,42 Vol.% |
| $H_2$ | 40,95 Vol.% | 41,10 Vol.% |
| $CH_4$ | 2,60 Vol.% | 2,61 Vol.% |
| $H_2S$ | 3627 ppm | 4199 ppm |
| COS | 480 ppm | 3,74 ppm |
| $COS_{Gleichgew. (1)}$ | 2,28 ppm | |
| $COS_{Gleichgew. (2)}$ | 120,497 ppm | |
| Selektivität | 98,7% | |

Beispiel 5

Ein Prozeßgas mit der in Tabelle V angegebenen Zusammensetzung wurde bei einem Druck von 41,8 atm, einer Temperatur von 179 °C und einer Raumgeschwindigkeit von 2850 vvh mit Wasserdampf (Volumverhältnis Dampf/Gas = 0,085) an einem Katalysator umgesetzt, der folgende Zusammensetzung hatte:

8% $Cr_2O_3$, 3% $K_2O$, Rest $\gamma$-$Al_2O_3$

Die Zusammensetzung des austretenden Gases sowie die theoretischen Gleichgewichtswerte für COS nach den Gleichungen (1) und (2) und die daraus errechnete Selektivität sind ebenfalls in Tabelle V angegeben.

Tabelle V

| Bestandteile | Gaszusammensetzung Eintritt | Austritt |
|---|---|---|
| CO | 19,25 Vol.% | 19,23 Vol.% |
| $CO_2$ | 34,55 Vol.% | 34,59 Vol.% |
| $H_2$ | 43,88 Vol.% | 43,86 Vol.% |
| $CH_4$ | 1,90 Vol.% | 1,90 Vol.% |
| $H_2S$ | 3683 ppm | 4227 ppm |
| COS | 523 ppm | 4,17 ppm |
| $COS_{Gleichgew. (1)}$ | 1,641 ppm | |
| $COS_{Gleichgew. (2)}$ | 114,491 ppm | |
| Selektivität | 97,7% | |

Beispiel 6

Ein Prozeßgas mit der in Tabelle VI angegebenen Zusammensetzung wurde bei einem Druck von 8 bar, einer Temperatur von 222 °C und einer Raumgeschwindigkeit (Naßgas) von 2040 vvh mit Wasserdampf (Volumverhältnis Dampf/Gas = 0,5 bis 1,0) an einem Katalysator umgesetzt, der folgende Zusammensetzung hatte:

9% $Cr_2O_3$, 4% $K_2O$, Rest $\gamma$-$Al_2O_3$

Im austretenden Gas wurden nur die Werte für COS (0,81 ppm) und HCN (2,0 ppm) bestimmt. Daraus errechnete sich ein COS-Umsatz von 99% und ein HCN-Umsatz von 96%. Dieses Beispiel zeigt also, daß der Katalysator einen hohen Wirkungsgrad bei der Hydrolyse von HCN hat.

Tabelle VI

| Bestandteile | Gaszusammensetzung Eintritt |
|---|---|
| CO | 34,6 Vol.% |
| $CO_2$ | 31,6 Vol.% |
| $H_2$ | 33,8 Vol.% |
| COS | 81 ppm |
| HCN | 51 ppm |

Beispiel 7

Ein Prozeßgas mit der in Tabelle VII angegebenen Zusammensetzung wurde bei einem Druck von 8 bar, einer Temperatur von 280 °C und einer Raumgeschwindigkeit (Naßgas) von 2040 vvh mit Wasserdampf (Volumverhältnis Dampf/Gas = 0,5 bis 1,0) an einem Katalysator umgesetzt, der folgende Zusammensetzung hatte:

10% $Cr_2O_3$, 5% $K_2O$, Rest $\gamma$-$Al_2O_3$

Im austretenden Gas wurden nur die Werte für COS (2,8 ppm) und HCN (0,0 ppm) bestimmt. Daraus errechnete sich ein COS-Umsatz von 93% und ein HCN-Umsatz von 100%.

Tabelle VII

| Bestandteile | Gaszusammensetzung Eintritt |
|---|---|
| CO | 34,6 Vol.% |
| $CO_2$ | 31,6 Vol.% |
| $H_2$ | 33,8 Vol.% |
| COS | 40 ppm |
| HCN | 46 ppm |

Beispiel 8

Ein Prozeßgas mit der in Beispiel 7 angegebenen Zusammensetzung wurde bei einem Druck von 8 bar, einer Temperatur von 280 °C und einer Raumgeschwindigkeit (Naßgas) von 5640 vvh mit Wasserdampf (Volumverhältnis Dampf/Gas = 0,5 bis 1,0) an einem Katalysator umgesetzt, der folgende Zusammensetzung hatte:

11% $Cr_2O_3$, 4% $K_2O$, Rest $\gamma$-$Al_2O_3$

Im austretenden Gas wurden nur die Werte für COS (3,2 ppm) und HCN (1,84 ppm) bestimmt. Daraus errechnete sich ein COS-Umsatz von 92% und ein HCN-Umsatz von 96%.

**Patentansprüche**

1. Verfahren zur selektiven katalytischen Hydrolyse der in CO-haltigen Prozeßgasen enthaltenen anorganischen Schwefelverbindungen COS und/oder $CS_2$, dadurch gekennzeichnet, daß man das Prozeßgas in Gegenwart von $H_2O$ bei Temperaturen von 100 bis 350 °C über einen alkalisierten Chromoxid-Aluminiumoxid-Katalysator leitet, der 3 bis 20 Gew.-% $Cr_2O_3$ enthält.

2. Verfahren nach Anspruch 1, dadurch gekennzeichnet, daß man einen Katalysator verwendet, der 0,1 bis 15, vorzugsweise 1 bis 10 Gew.-% einer alkalisch reagierenden Alkalimetallverbindung (berechnet als $Me_2O$, worin Me Na, K, Rb oder Cs bedeuten) enthält.

3. Verfahren nach Anspruch 1 oder 2, dadurch gekennzeichnet, daß die alkalisch reagierende Alkalimetallverbindung $K_2CO_3$ darstellt.

4. Verfahren nach einem der Ansprüche 1 bis 3, dadurch gekennzeichnet, daß das Aluminiumoxid $\gamma$-Aluminiumoxid darstellt.

5. Verfahren nach einem der Ansprüche 1 bis 4, dadurch gekennzeichnet, daß man das Prozeßgas bei erhöhten Drucken über den Katalysator leitet.

6. Verfahren nach einem der Ansprüche 1 bis 5, dadurch gekennzeichnet, daß man das Prozeßgas bei Temperaturen von 100 bis 300 °C über den Katalysator leitet.

7. Verfahren nach einem der Ansprüche 1 bis 6, dadurch gekennzeichnet, daß man ein HCN-haltiges Prozeßgas einsetzt.

**Claims**

1. A process for the selective catalytic hydrolysis of the inorganic sulphur compounds COS

and/or $CS_2$ present in CO-containing process gases, characterised in that the process gas is passed over an alkalised chromium oxide-aluminium oxide catalyst, which contains 3 to 20% by weight of $Cr_2O_3$, in the presence of $H_2O$ at temperatures of from 100 to 350 °C.

2. Process according to Claim 1, characterised in that a catalyst is used which contains 0.1 to 15% by weight, preferably 1 to 10% by weight of an alkali metal compound which reacts in an alkaline manner (calculated as $Me_2O$, wherein Me signifies Na, K, Rb or Cs).

3. Process according to Claim 1 or 2, characterised in that the alkali metal compound which reacts in an alkaline manner represents $K_2CO_3$.

4. Process according to any one of Claims 1 to 3, characterised in that the aluminium oxide represents γ-aluminium oxide.

5. Process according to any one of Claims 1 to 4, characterised in that the process gas is passed over the catalyst at elevated pressures.

6. Process according to any one of Claims 1 to 5, characterised in that the process gas is passed over the catalyst at temperatures of from 100 to 300 °C.

7. Process according to any one of Claims 1 to 6, characterised in that a process gas containing HCN is used.

**Revendications**

1. Procédé pour l'hydrolyse catalytique sélective des composés soufrés minéraux COS et/ou $CS_2$ contenus dans des gaz de procédé contenant du CO, caractérisé en ce que l'on conduit le gaz de procédé en présence d'$H_2O$ à des températures de 100 à 350 °C au dessus d'un catalyseur d'oxyde de chrome et d'oxyde d'aluminium alcalinisé qui contient de 3 à 20% en poids de $Cr_2O_3$.

2. Procédé selon la revendication 1, caractérisé en ce que l'on utilise un catalyseur qui contient de 0,1 à 15, de préférence de 1 à 10% en poids d'un composé de métal alcalin à réaction alcaline (calculé comme étant $Me_2O$. Me signifiant Na, K, Rb ou Cs).

3. Procédé selon la revendication 1 ou 2, caractérisé en ce que le composé de métal alcalin à réaction alcaline représente $K_2CO_3$.

4. Procédé selon l'une des revendications 1 à 3, caractérisé en ce que l'oxyde d'aluminium représente l'oxyde d'aluminium γ.

5. Procédé selon l'une des revendications 1 à 4, caractérisé en ce que l'on conduit le gaz de procédé au dessus du catalyseur à des pressions élevées.

6. Procédé selon l'une des revendications 1 à 5, caractérisé en ce que l'on conduit le gaz de procédé au dessus du catalyseur à des températures de 100 °C à 300 °C.

7. Procédé selon l'une des revendications 1 à 6, caractérisé en ce que l'on met en œuvre un gaz de procédé contenant HCN.